# EUROPEAN PATENT SPECIFICATION

(11) **EP 1 531 641 B1**
(45) Date of publication and mention of the grant of the patent: **19.09.2007**
(21) Application number: 04025995.4
(22) Date of filing: 03.11.2004
(51) Int. Cl.: H04Q 7/32

(54) **A server apparatus**
Servervorrichtung
Appareil serveur

(30) Priority: 12.11.2003 JP 2003383108
(43) Date of publication of application: 18.05.2005
(73) Proprietor: NTT DoCoMo, Inc., Tokyo 100-6150 (JP)
(72) Inventor: Ito, Takashi c/o Int. Prop. Dept., Chiyoda-ku Tokyo 100-6150 (JP); Ando, Tomohiro c/o Int. Prop. Dept., Chiyoda-ku Tokyo 100-6150 (JP)
(74) Representative: HOFFMANN EITLE

(56) References cited:
- EP-A- 1 109 370
- EP-A- 1 311 100
- GB-A- 2 386 505
- US-A1- 2002 152 282
- US-A1- 2003 008 662
- ROBERTS-WITT S L: "The 1999 Utility Guide: Corporate Filtering" 4 May 1999 (1999-05-04), PC MAGAZINE - US EDITION, ZIFF-DAVIS, NEW YORK, NY, US, PAGE(S) 1-11 , XP002278816 ISSN: 0888-8507 * page 1 - page 2 *

## Description

The present invention relates to a server apparatus for managing communications performed by a mobile station.

Nowadays, an increasing number of business corporations/organizations provide their employees with mobile phones, on loan, for use in their work (In this specification, the term corporation will be used to include any type of business corporation or organization; the term 'employee' will be used to describe an employee or a member of a corporation or organization).

An employee may freely make calls from such a corporation-owned mobile phone. Thus, it is crucial for a corporation to distinguish between business use and private use of the mobile phone by an employee, since it is not the intent of a corporation to cover the cost of private calls made by the employee.

As a partial solution to the foregoing problem, patent publication JP-A- 11-88505, for example, discloses a method of storing in a terminal separate communication logs for business use and private use of a mobile phone.

However, the criteria for defining the boundary between business use and private use may change depending on the policy of a corporation. The criteria may also change on a case-by-case basis. For example, some corporations strictly discriminate between business use and private use, whereas other corporations are more lenient Even in a single corporation, the criteria may change depending on the rank of an employee or the division an employee belongs to. The criterion may also change depending on when a call is made, such as during business hours or on holidays.

A further point to note is that mobile phones which can access the Internet are in widespread use. Employees are able to use such mobile phones to navigate Internet sites either for leisure purposes, or to retrieve useful information necessary to their work. Thus, it is not practical to apply a common criterion restricting all Web accesses by mobile phones.

Also, it is preferable that employees do not define their own criteria, since their judgment may be unreliable. Thus, a method of implementing criteria defined by each corporation is required.

The Internet is a network open to everyone. A considerable number of Web sites publicize information which may be considered offensive to public morality. In many cases, relatively expensive fees are required for access to such sites. Thus, corporations may wish to prohibit their employee from accessing such Web sites. Specific criteria for prohibiting access to Web sites may vary between corporations, or depending on a division or rank of each employee

The method disclosed in the patent publication JP-A-1999-88505, however, does not provide flexible solutions to meet the individual needs of separate corporations.

It is desirable to provide a server apparatus and a method for managing and/or restricting communications performed by a mobile station properly, in accordance with individual requirements of separate corporations. US patent application US 2003/008662 A1 (Stern Edith H et al.), 9 January 2003, describes systems and methods wherein a mobile user device operates in accordance with a location policy and user device information. According to one embodiment, a location policy associated with a location is determined. For example, a school may establish a location policy that prevents students from wirelessly exchanging information during class. User device information associated with a mobile user device is also determined. For example, it may be determined if the mobile user device is being used by a student or a teacher. It is then arranged for the mobile user device to operate in accordance with the location policy and the user device information.

According to the present invention, there is provided a server apparatus according to appended independent claim 1.

Preferred embodiments are defined in the appended dependent claims.

For a better understanding of the invention and to show how the same may be carried into effect, reference will now be made, by way of example, to the accompanying drawings, in which:
Fig. 1 is a block diagram illustrating a general configuration of a system;
Fig. 2 is a block diagram illustrating a configuration of a mobile station of the same system;
Figs. 3 to 5 are drawings illustrating examples of condition files stored in a mobile station of the same system;
Fig. 6 is a drawing illustrating an example of logs of communications stored in a mobile station of the same system;
Fig. 7 is a block diagram illustrating a configuration of a communication management server of the same system;
Fig. 8 is a drawing illustrating an example of a condition database stored in a communication management server of the same system;
Fig. 9 is a drawing illustrating an example of a log database stored in a communication management server of the same system;
Fig. 10 is a sequence diagram illustrating an operation of the whole of the same system; and
Fig. 11 is a drawing illustrating an example of logs of communications displayed on a display of a computer or other terminal of a corporation of the same system.

To accomplish the above mentioned object, an arrangement provides a server apparatus having a receiving unit for receiving from a node via a network an MS-ID of each of a plurality of mobile stations and a condition file corresponding to each mobile station; and a delivering unit for transmitting to each mobile station via a mobile communication network the condition file received by the receiving unit corresponding to the MS-ID of the mobile station. According to the present server apparatus arrangement, a condition file is properly defined and is received for each mobile station, and the received condition file is transmitted to a specified mobile station. Thus, a log can be managed having different criteria for each mobile station.

The present invention provides a server apparatus having a condition database in which an MS-ID and a condition file are stored for each mobile station, each MS-ID being uniquely assigned to each mobile station, and each condition file specifying for each mobile station details of a type of communication performed by each mobile station, the details to be stored in logs at each mobile station; and a delivering unit for transmitting to each mobile station a condition file stored in the condition database corresponding to the MS-ID of each mobile station. According to the present server apparatus, a condition file is properly defined and is transmitted to each mobile station. Thus, a log can be managed having different criteria for each mobile station.

In a preferred embodiment, the condition file includes at least one of a time condition, indicating a time of day when the communication to be stored occurred, a destination condition of the communication to be stored, and a keyword condition of the communication to be stored. Thus, a log can be managed depending on time of communication and destination of communication and contents of communication performed by each mobile station.

In another preferred embodiment, the server apparatus further has a log database in which a corporate ID, one or more sets of MS-IDs and one or more employee IDs are stored for each corporation, a corporate ID is uniquely assigned to each corporation, a unique employee ID being assigned to each user authorized by each corporation to use a mobile station having the MS-ID; and a receiving unit of receiving from each mobile station via a mobile communication network an MS-ID of each mobile station and the logs stored in each mobile station, wherein the logs received from each mobile station by the receiving unit are stored in the log database corresponding to the corporate ID, the corporate ID corresponding to the MS-ID received from each mobile station in the log database, and wherein the transmitting unit transmits logs for each mobile station stored in the log database to a mobile station having an MS-ID corresponding to the logs. According to this embodiment, logs of communications performed by each mobile station can be transmitted only to a preset mobile station (for example a mobile station belonging to the same corporation as each of the other mobile stations)

In another preferred embodiment, the server apparatus further has a storage unit for storing authentication information corresponding to an MS ID of each mobile station, the authentication data is used for accessing logs stored in the each mobile station, and the delivering unit transmits to a mobile station, via the mobile communication network, authentication information stored in the storage unit corresponding to an MS-ID of a mobile station. According to this embodiment, authentication information is required to access logs stored in each mobile station. Thus, only a person who knows this authentication information can access the logs stored in a mobile station.

An arrangement provides a server apparatus having a receiving unit for receiving an MS-ID and a condition file, an MS-ID being assigned to each mobile station, a condition file including criteria for restriction of communications performed by each mobile station; and a delivering unit for transmitting to each mobile station via a mobile communication network the condition file received by the receiving unit corresponding to the MS-ID of each of the other mobile stations. According to the present server apparatus arrangement, a condition file is properly defined and is received for each mobile station, and the received condition file is transmitted to a specified mobile station. Thus, communications performed can be restricted according to different criteria for each mobile station.

A further arrangement provides a server apparatus having a condition database in which an MS-ID and a condition file are stored for each mobile station, an MS-ID being uniquely assigned to the each mobile station, and the condition file specifying for each mobile station types of communications which are prohibited; and a delivering unit for transmitting to each mobile station a condition file stored in the condition file storage database corresponding to the MS-ID of each mobile station. According to the present server apparatus arrangement, a properly defined condition file is transmitted to each mobile station. Thus, communications performed can be restricted according to different criteria for each mobile station.

According to a modification of the above arrangement, the condition file for each mobile station includes either a prohibited destination(s) or an allowed destination(s). Thus communications performed by a destination mobile station are able to be restricted or allowed with desired criteria.

### A. Configuration

### A-1. Communication system

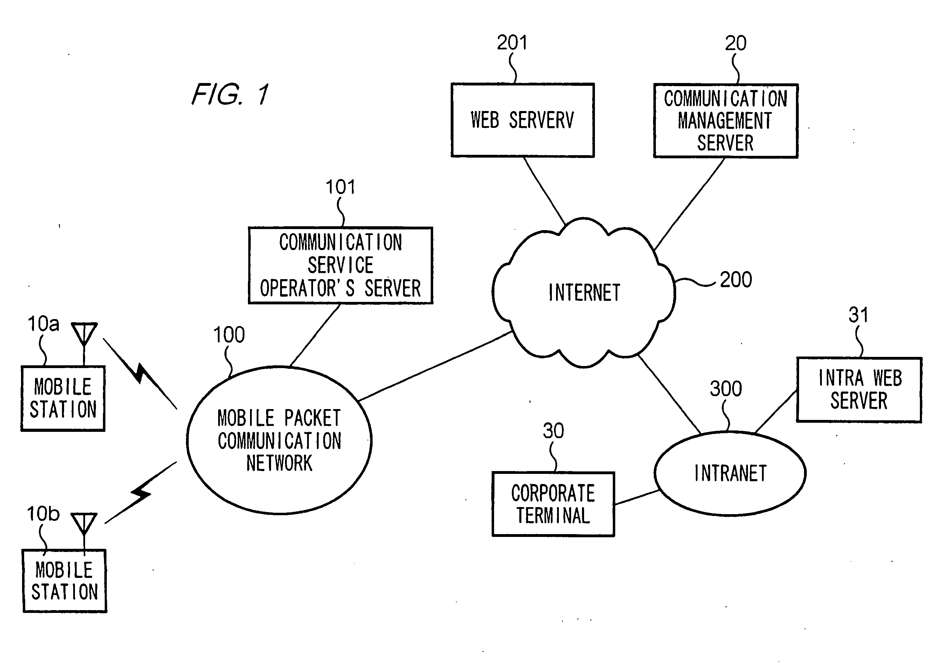

Fig. 1 illustrates a configuration of a system. As shown in Fig. 1, the system includes three types of networks: a mobile packet communication network 100, the Internet 200, and an Intranet 300. Intranet 300 is a private local area network within a corporation. Mobile packet communication network 100 is connected to Internet 200 via communication units such as a gateway unit and a firewall unit, which are not shown in Fig. 1, so as to allow bidirectional data communication between mobile packet communication network 100 and Internet 200. Similarly, Intranet 300 is connected to Internet 200, so as to allow bidirectional data communication between Intranet 300 and Internet 200.

It is to be noted that to make the drawing concise only two mobile stations 10a and 10b, an Intranet 300, a corporate terminal 30, and two Web servers 101 and 31 are shown in Fig. 1. However, more of these may be included in the present system.

Mobile stations 10a and 10b have a common configuration and work in an identical manner; therefore, they will be referred to below as mobile station 10, unless it is necessary to distinguish between them.

Mobile station 10 is lent by a corporation to an employee, and the employee is allowed to use mobile station 10 for his/her business use. Mobile station 10 is, more specifically, a PDC (Personal Digital Cellular) type mobile phone, an IMT-2000 (International Mobile Telecommunications-2000) type mobile phone, a PHS (Personal Handyphone System TM) type mobile phone, or a PDA (Personal Digital Assistant) capable of any one type of wireless communication. Mobile packet communication network 100 provides mobile stations 10 with service for mobile packet communication.

Mobile station 10 stores an email program, and acts as an email client by executing the email program. Mobile station 10 stores a Web browsing program, and acts as a Web client by executing the Web browsing program. Thus, an employee carrying mobile station 10 can access Web server 201 connected to Internet 200 and browse a Web site hosted by Web server 201, and can access Web server 31 connected to Intranet 300 and browse a Web site hosted by Web server 31. Web server 31 will be referred as Intra Web server 31 below. Web sites hosted by Web server 201 and Web sites hosted by an Intra Web server will be described separately. Web sites hosted by Web server 201 will be referred to as open sites. Web sites hosted by an Intra Web server will be referred to as Intra sites. The access to a Web site from mobile station 10 will be referred to as a 'Web access'.

Communication management server 20 is connected to Internet 200, and is operated by a service provider that provides a corporate service for managing communications performed by the corporate employee. Communication management server 20 manages, in accordance with requests from the corporation, communications performed by mobile station 10 of the employee. Specifically, communication management server 20 gathers from mobile station 10 logs of email transmission/reception and Web accesses performed by each mobile station 10, which agree with the criteria set by a corporation. On receiving a transmission request from a corporate terminal 30 connected to Intranet 300, communication management server 20 transmits the received logs to the corporate terminal 30. Communication management server 20 restricts/prohibits communication performed by each of mobile stations 10, including email transmission/reception and Web accesses, in accordance with criteria set by a corporation. To perform such operations, communication management server 20 performs necessary data communications with mobile stations 10. These data communications are relayed by communication service operator's server 101 connected to mobile packet communication network 100.

### A-2. Mobile station

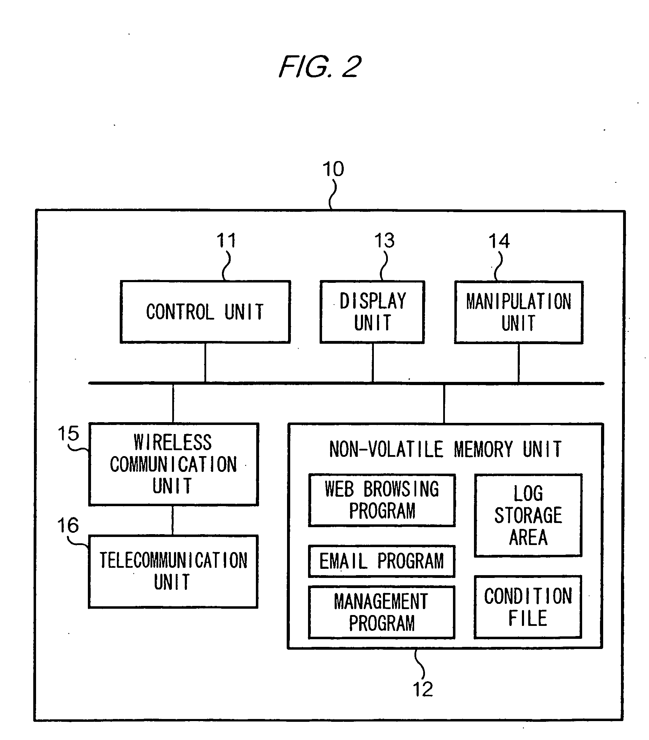

Fig. 2 illustrates a configuration of mobile station 10 according to the present system. As shown in Fig. 2, mobile station 10 includes a control unit 11, a non-volatile memory unit 12, a display unit 13, a manipulating unit 14, a wireless communication unit 15, and a telecommunication unit 16. Wireless communication unit 15 includes an antenna and communication control circuits, which are not shown in Fig. 2, so as to perform wireless communications with a base station in mobile packet communication network 100. Manipulating unit 14 includes a keypad with which an operator (an employee) performs various input operations, and provides control unit 11 with output signals corresponding to the input key. Display unit 13 includes Liquid Crystal Display and its driving circuits, and displays images corresponding to the output signals provided from control unit 11. Telecommunication unit 16 includes a microphone and a loudspeaker for voice input and output.

Control unit 11 includes an operating unit such as a CPU (Central Processing Unit), and its own memory unit such as ROM (Read-Only Memory) or RAM (Random Access Memory). Control unit 11 reads out computer programs stored in its own memory unit or non-volatile memory unit 12, and controls component units of mobile station 10 by executing the computer programs.

Non-volatile memory unit 12 is typically configured as EEPROM (Electrically Erasable Programmable Read-Only Memory), and stores computer programs such as a Web browsing program and an email program. The Web browsing program and the email program are pre-installed in non-volatile memory unit 12. Non-volatile memory unit 12 also stores a management program for mobile station 10, and a condition file. Further, non-volatile memory unit 12 has a storage area for logs of communications. The storage area for logs of communications will be referred as log storage area. A management program for mobile station 10 is a computer program defining the procedures performed by mobile station 10, such as storing logs of communications and restricting communications. Each mobile station 10 stores a common management program.

A condition file is used to specify communications to be stored in logs or to be restricted. Each mobile station 10 stores its own condition file. More specifically, the condition file includes 'Target' fields for specifying types of communications to be stored in logs; 'Class' field for specifying classifications of each communication to be stored; and 'Restriction' field for prohibiting compulsory specific Web accesses and email reception/transmission. The management program and the condition file are not pre-installed in non-volatile memory unit 12, but are downloaded into non-volatile memory unit 12 from communication management server 20 via Internet 200 and mobile packet communication network 100.

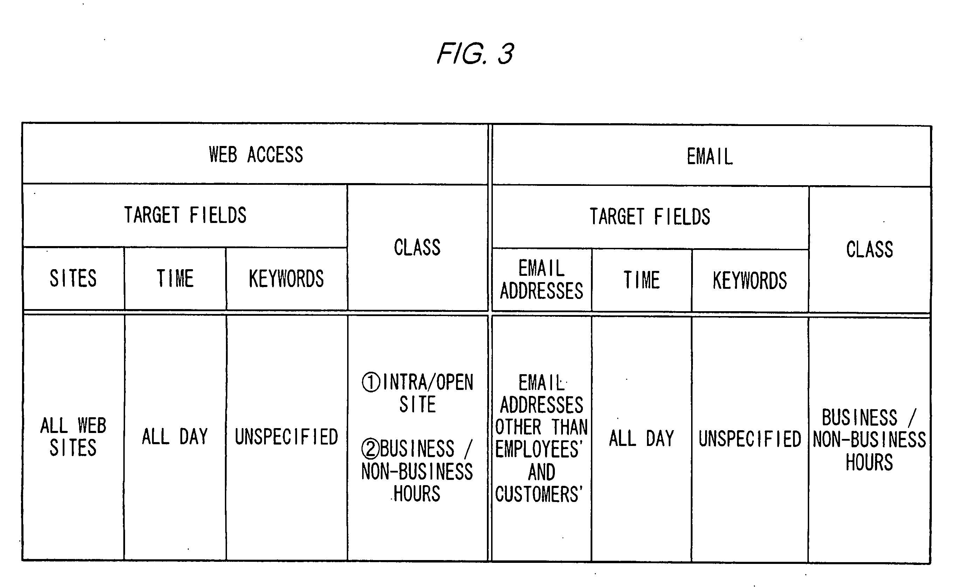

Details of the condition file will be described with reference to Figs. 3 to 5.

Fig. 3 illustrates an example of a condition file stored in a mobile station according to the present system. In the condition file shown in Fig. 3, Web accesses to be stored in logs are specified with sites being 'All Web sites', time of access being 'all days' and keywords of sites being 'unspecified'. Namely, the condition file indicates that all Web accesses performed by mobile station 10 at any time are stored in logs, regardless of whether they are open sites or Intra sites.

Each Web access to be stored is classified in a manner specified in the 'Class' field. Each Web access is classified either to an Intra site or to an open site. Each Web access is classified either in business hours (for example AM 09:00 to PM 06:00) or in non-business hours. It is to be noted that the field 'keywords' specifies that Web accesses to the Web sites including specific keywords are to be stored in logs. In the example shown in Fig. 3, the field is 'unspecified'. Thus, regardless of contents of Web sites, all Web accesses are stored in logs.

Email reception/transmission to be stored in logs is specified with a destination email address 'other than employees' email addresses and customers' email addresses', time of transmission/reception being 'all day' and keywords of an email being 'unspecified'. Namely, the condition file indicates that email transmissions from mobile station 10 to the destination email addresses other than employees' email addresses and customers' email addresses are stored in logs, regardless of time of each transmission.

The logs are classified in a manner specified in the 'Class field'. Each email transmission is classified either in business hours (for example AM 09:00 to PM 06:00) or in non-business hours.

In Fig. 3, specific email addresses of employees and customers are not used. In the 'Email addresses' field of a condition file, known email addresses of employees and customers may be preset to specify email addresses other than those of employees and customers. As an alternative, by using a known address function of mobile station 10, the preset email addresses of employees and customers may be used to specify email addresses other than those of employees and customers.

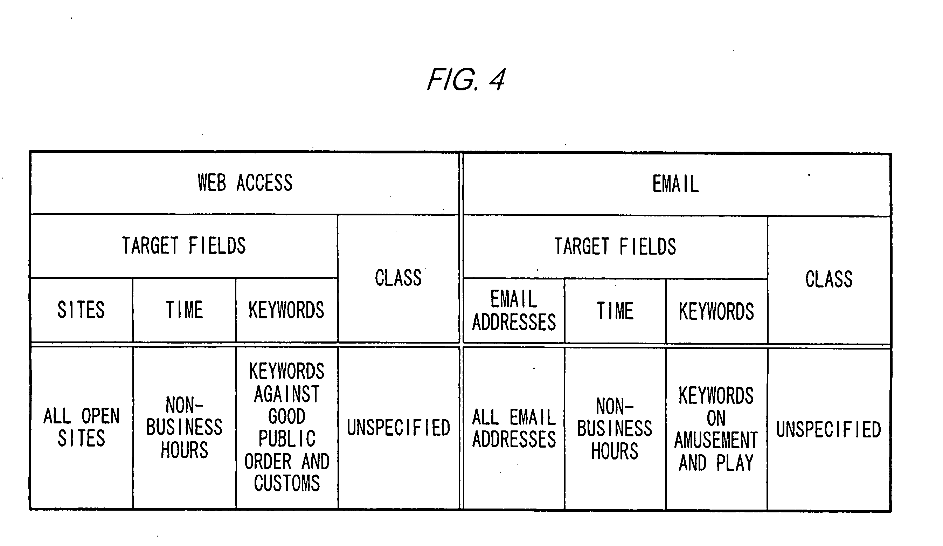

Fig. 4 illustrates another example of a condition file stored in a mobile station of the present system; in the condition file the 'keywords' field is specified.

Web accesses to be stored in logs are specified with sites being 'All open sites', time of access being 'in non-business hours' and keywords of sites being 'keywords indicating sites contravening good public sense and morality'. Namely, the condition file indicates that all Web accesses performed by mobile station 10 in non-business hours to any open web sites including keywords indicating sites contravening good public sense and morality are stored in logs.

Email reception/transmission to be stored in logs is specified with a destination email address being 'all email addresses', time of transmission/reception being 'in non-business hours' and keywords of an email being 'keywords relating to amusement and leisure. Namely, the condition file indicates that all transmission/reception of any email including in its body keywords relating to amusement and leisure performed by mobile station 10 in non-business hours are stored in logs.

In Fig. 4, specific keywords indicating sites contravening good public sense and morality and specific keywords relating to amusement and leisure are not used. These keywords defined by the operator of communication management server 20 or by each corporation, may be preset in the 'keywords' field of the condition file stored in communication management server 20.

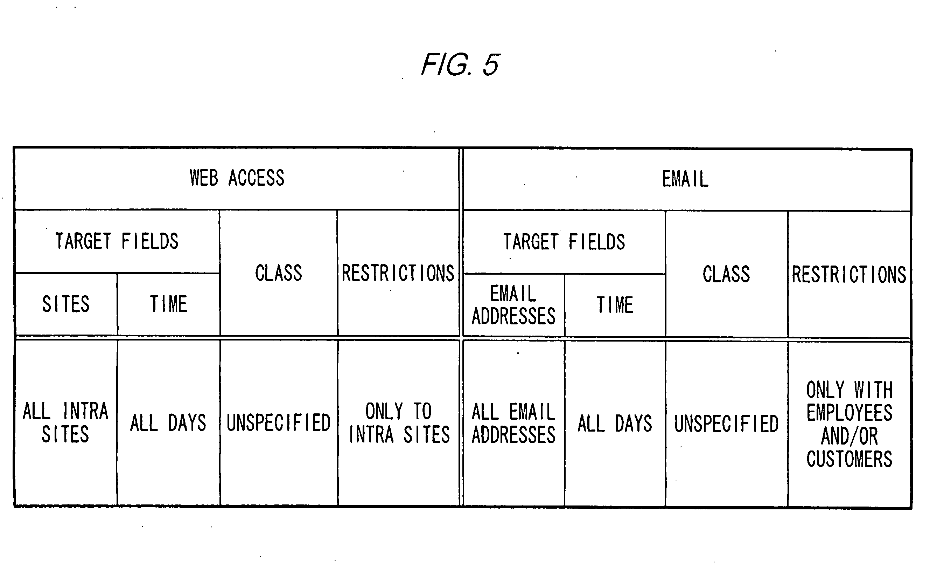

Fig. 5 illustrates an example of a condition file including 'Restrictions' field stored in a mobile station of the present system.

Web accesses to be stored in logs are specified with sites being 'All Intra sites', time of access being 'All days', and keywords of sites being 'unspecified'. Web accesses to be restricted are specified with restriction of accesses being 'only access to Intra sites'. The condition file indicates that mobile station 10 is allowed to perform Web accesses only to Intra sites, and that all Web accesses to Intra sites are stored in logs, regardless of time of each Web access.

Email reception/transmission to be stored in logs is specified with a destination email address being 'all email addresses', time of transmission/reception being 'all days' and keywords of an email being 'unspecified'. Email reception/transmission to be restricted is specified with restriction of email being 'only to employees' or customers'. The condition file indicates that mobile station 10 is allowed to perform email transmission/reception only with an employee of the same corporation, or with customers, and that all email transmissions/receptions are stored in logs, regardless of time of email transmissions/receptions.

It is to be noted that, in the 'restriction' fields, allowed destination email addresses may be specified as described above. As an alternative, prohibited destination email addresses may be specified.

Details of logs will be described, the logs being stored in accordance with the above-described condition file.

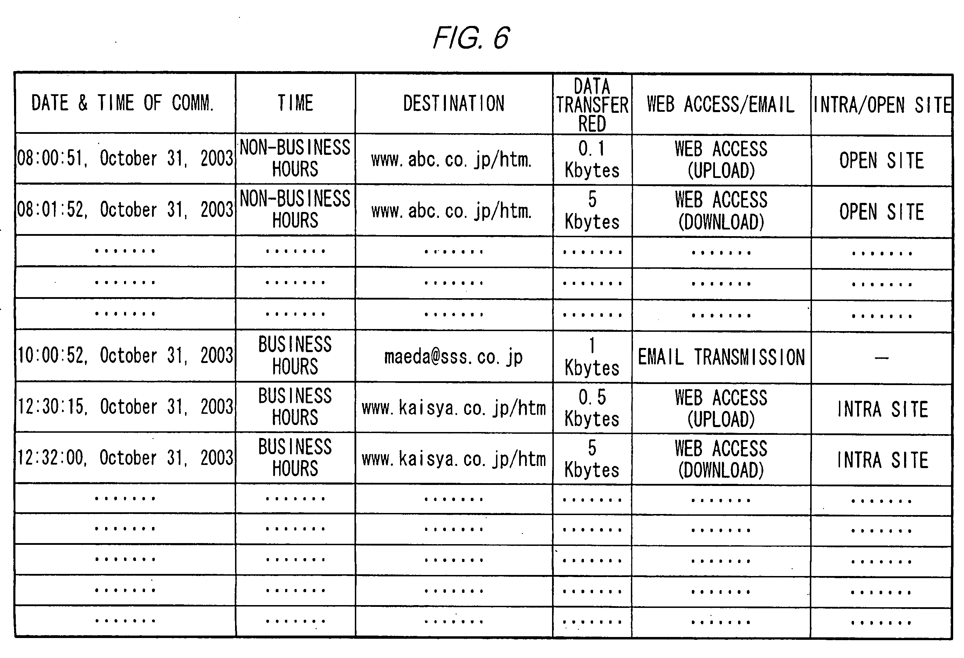

Fig. 6 is a drawing illustrating an example of logs of communications stored in a mobile station in accordance with the condition file shown in Fig. 3. In Fig. 6, the first, the oldest log record indicates that an HTTP request of data size '0.1 Kbytes' is transmitted for a 'Web access' to an 'open site' specified by the URL 'www.abc.co.jp/htm' at 'AM 08:00:51' on 'October 31, 2003'. The second oldest record indicates that an HTTP response of data size '5 Kbytes' is received in response to the foregoing HTTP request from the open site at 'AM 08:00:52' on 'October 31, 2003'. The sixth oldest record indicates that an email of data size '1 Kbytes' is transmitted to the destination email address 'maeda@sss.co.jp' at 'AM 10:00:52' on 'October 31, 2003'.

In Fig. 6, each Web access is classified either to 'Intra sites' or to 'open sites', in accordance with the 'Class' field in the Fig. 3. Each web access is also classified either in 'business hours' or in 'non-business hours'.

### A-3. Communication management server

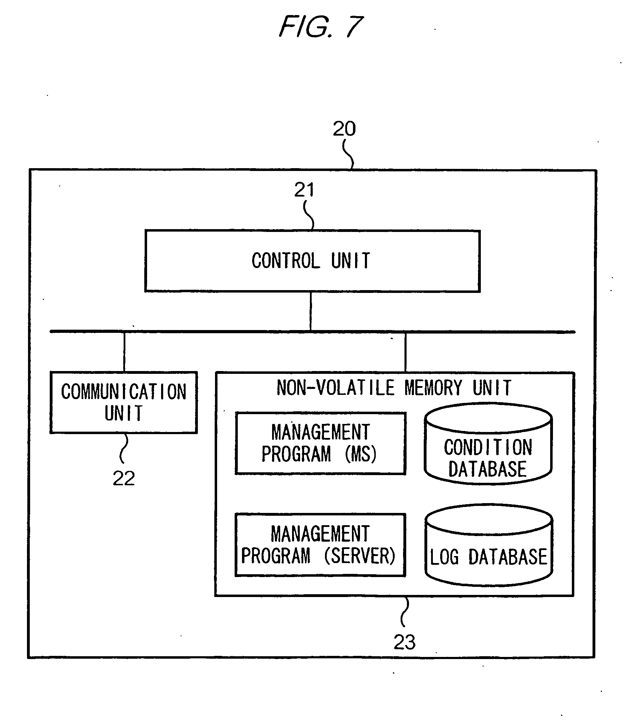

Fig. 7 illustrates a configuration of a communication management server 20 of the present system.

As shown in Fig. 7, communication management server 20 includes a control unit 21, a communication unit 22, and a non-volatile memory unit 23. Control unit 21 includes an operating unit such as a CPU (Central Processing Unit), and its own memory unit such as ROM (Read-Only Memory) or RAM (Random Access Memory). Control unit 21 reads out computer programs stored in its own memory unit or non-volatile memory unit 23, and controls communication management server 20 by executing the computer programs.

Communication unit 22 includes a connection interface to Internet 200 and communication control circuits, and performs data communications via Internet 200 under control of control unit 21.

Non-volatile memory unit 23 is typically configured as a mass storage unit such as a hard disk drive. Non-volatile memory unit 23 stores a condition database and a log database. The condition database includes a condition file for each mobile station, the condition file is received from corporate terminal 30, and is then transmitted to each mobile station 10. The log database includes a log of communications received from each mobile station 10. Furthermore, non-volatile memory unit 23 stores a management program to be transmitted to each mobile station 10 and a management program defining a flow of operations of control unit 21.

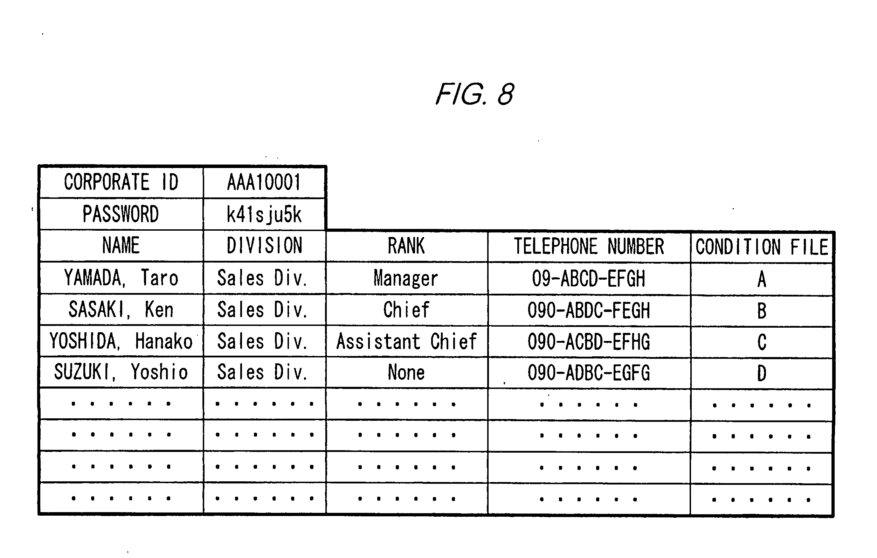

Fig. 8 is a drawing illustrating an example of a condition database of the present system. As shown in Fig. 8, 'name' 'division', and 'rank' of each corporate employee, 'telephone number' of a mobile phone 10 of each employee, and a condition file to be transmitted to the mobile phone 10 are stored in the condition database, for each set of 'corporate ID' assigned to each corporation and a 'password'. In Fig. 8, the short form expressions: conditions A, B, C, D are used for the sake of brevity, since details of a condition file have been described with reference to Figs. 3 to 5.

A set of a corporate ID and a password is authentication information required for corporate terminal 30 to transmit a condition file to communication management server 20. The condition file is only allowed to be transmitted when the corporate ID and password transmitted from corporate terminal 30 to communication management server are recognized to correspond to each other. A correspondence between a corporate ID and password are pre-determined between a corporation and the service provider.

Control unit 21 transmits a request for transmitting to communication service operator's server 101, a set of a telephone number and a condition file included in the condition database and a management program stored in non-volatile memory unit 23. On receiving the transmission request, communication service operator's server 101 makes a call to the mobile station corresponding to the received telephone number. On receiving a response from the mobile station 10, communication service operator's server 101 transmits a management program and a condition file to the mobile station 10. Thus, a condition file and a management program are transmitted from communication management server 20 to mobile station 10.

Mobile station 10 cannot be used for data communication in mobile packet communication network 100, until an MS-ID (mobile station identifier) specific to the unit such as 'telephone number' is assigned to the mobile station 10. Furthermore a telephone number assigned to a mobile phone is generally very difficult to falsify. Namely, communications are very secure in mobile packet communication network 100. This security allows communication management server 20 to transmit a condition file securely to a correct destination mobile station 10.

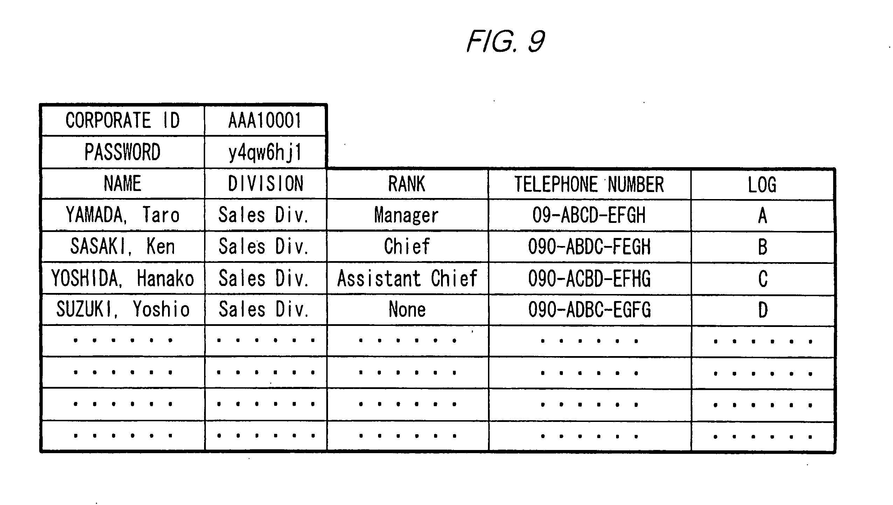

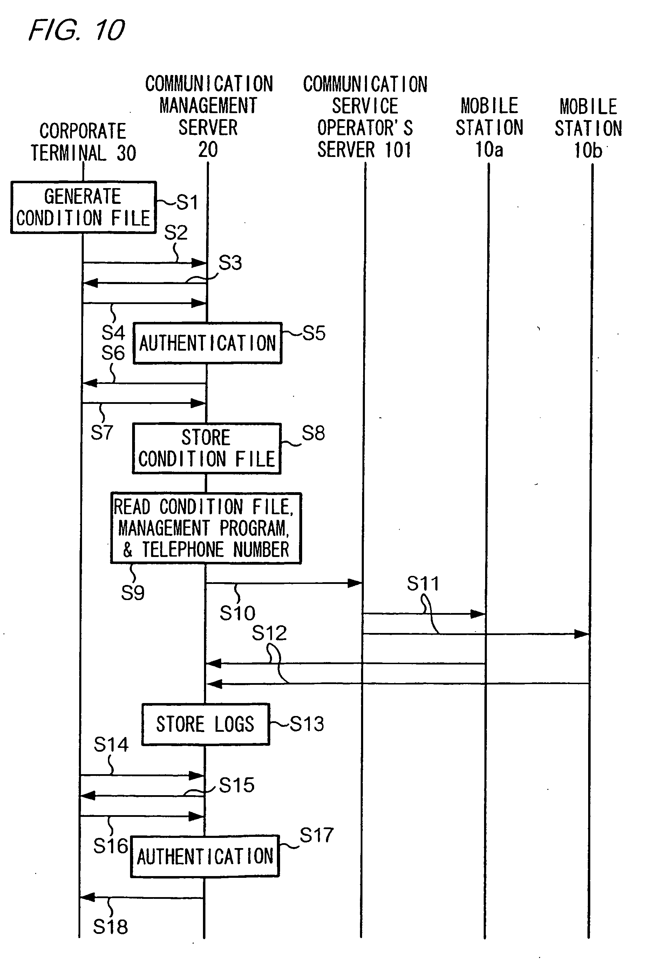

Fig. 9 is a drawing illustrating an example of a log database stored in non-volatile memory unit 23 of communication management server 20 of the present system. As shown in Fig. 9, 'name' 'division', and' rank' of each corporate employee, 'telephone number' of a mobile phone 10 of each employee, and log of communications performed by the mobile phone 10 are stored in the log database, for each set of 'corporate ID' assigned to each corporation and a 'password'. In Fig. 10, the short form expressions: logs A, B, C, D are used, since details of a log have been described with reference to Fig. 6.

A set of a corporate ID and a password is authentication information required to enable corporate terminal 30 to access communication management server 20 to obtain a log. The log can only be obtained, when corporate ID and password transmitted from corporate terminal 30 to communication management server are recognized to correspond to each other. The password for accessing the condition database and the password for accessing the log database may be same for a single corporation. However, to achieve a higher level of security, it is preferable to use different passwords for each database as shown in Figs. 8 and 9.

### B. Operations

Fig. 10 is a sequence diagram illustrating an operation of the system of the present system.

For each mobile station 10 used by each employee of each corporation an individual condition file is prepared (Step S1). For example, an operator of corporate terminal 30 may prepare in corporate terminal 30, one by one, a condition file for each mobile station in accordance with a prescribed input format. In another example, a database server stores corporate rules and regulations for determining a condition file for each employee according to attributes of an employee, such as division or rank. This server is connected to Intranet 300, and transmits information to corporate terminal 30 via Intranet 300. Then corporate terminal 30 automatically generates condition files for employee on the basis of the received information.

The operator of corporate terminal 30 operates the corporate terminal 30 to access communication management server 20. Then, corporate terminal 30 accesses communication management server 20 via Intranet 300 and Internet 200 (Step S2). When accessed, communication management server 20, which is continually runs its own management program stored in non-volatile memory unit 23, transmits to corporate terminal 3 data for causing corporate terminal 30 to display an input dialog of a corporate ID and a password (Step S3). The operator of corporate terminal 30 inputs a prescribed corporate ID and password in the input fields of the displayed input dialog. Corporate terminal 30 transmits the input corporate ID and password to communication management server 20 (Step S4).

Communication management server 20 determines whether the received set of a corporate ID and a password agrees with the set included in the condition database stored in non-volatile memory unit 23, so as to authenticate the access from corporate terminal 30 (Step S5). If the access from corporate terminal 30 is authenticated, communication management server 20 transmits to corporate terminal 30 data for causing corporate terminal 30 to display an input dialog of a condition file (Step S6). The operator of corporate terminal 30 inputs a condition file prepared in Step S1 for the mobile phone and a telephone number of the mobile phone in the input dialog. Corporate terminal 30 transmits the input condition file and telephone number to communication management server 20 (Step S7).

Communication management server 20 stores the received condition file and telephone number in the condition database in non-volatile memory unit 23 (Step S8). Communication management server 20 reads a management program as well as the condition file and the telephone number from non-volatile memory unit 23 (Step S9). Communication management server 20 transmits the telephone number, management program, and condition file to communication service operator's server 101 (Step S10). Communication service operator's server 101 makes a call to each mobile station 10 on the basis of the received telephone number, and transmits to each mobile station 10 the received management program and condition file for each mobile station 10 (Step S11).

Each mobile station 10 stores the received management program and condition file in non-volatile memory 12. Each mobile station 10 starts the management program and performs in accordance with the condition file storing a log in log storage area of a non-volatile memory unit 12, or restricting communications. The management program is continually running while mobile station 10 is switched on; thus, the above-described operation such as storing a log or restoring communications are performed continuously over a prescribed period, such as one month

After a prescribed period has passed, each mobile station 10 reads a log stored in non-volatile memory unit 12, and transmits it to communication management server 20 (Step S12). After the transmission, mobile station 10 deletes the log in non-volatile memory unit 12, and restarts operations such as storing a log or restoring communications.

Communication management server 20 stores the log received from mobile station 10 in a log database in non-volatile memory unit 23 (Step S13).

When an operator of corporate terminal 30 operates corporate terminal 30 to access a log stored in communication management server 20, corporate terminal 30 transmits a request to access a log in communication management server 20 (Step S14). On receiving the request, communication management server 20 transmits data for causing corporate terminal 30 to display an input dialog of a corporate ID and a password (Step S15). The operator operates corporate terminal 30 to input a corporate ID and a password in the input field of the input dialog. Corporate terminal 30 transmits the input corporate ID and password to communication management server 20 (Step S16).

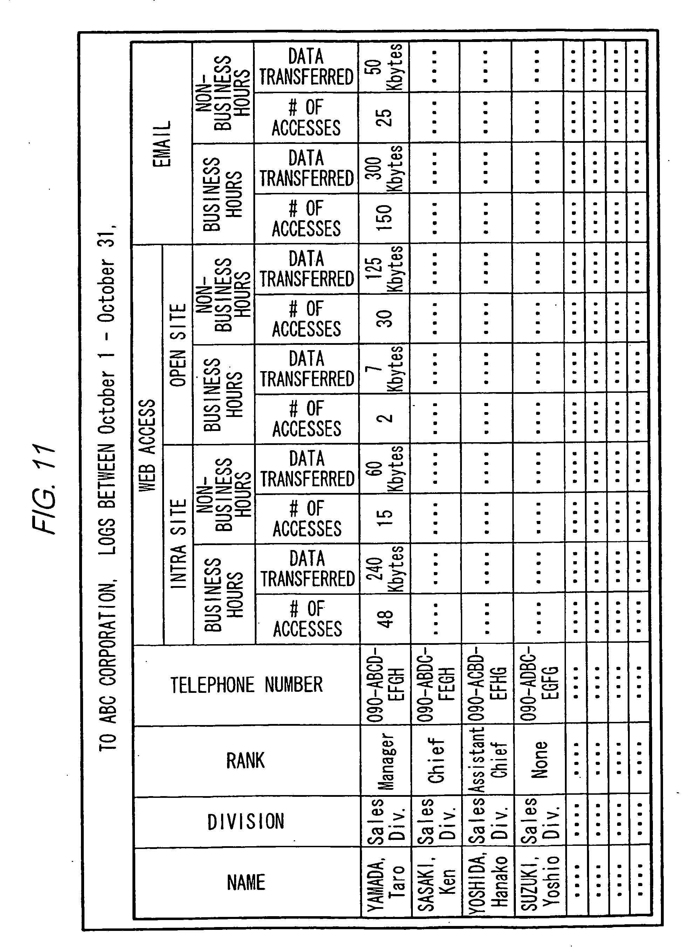

Communication management server 20 determines whether the received set of corporate ID and password agree with the set included in the log database in non-volatile memory unit 23, so as to authenticate the access from corporate terminal 30 (Step S17). If the access from corporate terminal 30 is authenticated, communication management server 20 reads a log stored in the log database corresponding to the received corporate ID, converts the log to a readable format for the operator, and transmits it to the corporate terminal 30 (Step S18). Thus, the operator is able to view a typical log shown in Fig. 11.

Each time the prescribed period has passed, a log is transmitted from mobile station 10 to communication management server 20 in an identical manner. Thus, the operator is able to access an updated log in communication management server 20 by operating corporate terminal 30 at any time.

It is to be noted that, to update the condition file or the management program, a new condition file or a new management program may be transmitted using a similar procedure to steps S1 to S11 described above. Thus, they may be updated promptly if necessary, for example, in a case that criteria set by a corporation are changed or in cases of personnel changes within a corporation, assignment of a new employee, or resignation

According to the above-described system, logs of email transmission/reception and Web accesses performed by each mobile station 10 can be gathered from each mobile station 10 in accordance with criteria set by a corporation, to store them and to provide them to the corporation. Some portions of communications, such as email transmission/reception and Web accesses performed by each mobile station 10 may be restricted in accordance with criteria set by each corporation

### C. Modifications

The system is not limited to the above-mentioned system. Modifications are applicable as follows:

### C-1.

Communication management server 20 does not have to be a monolithic server, and may be a plurality of servers. All or some operations performed by communication management server 20 may be performed by communication service operator's server 101. In this specification, the term 'server apparatus' includes communication management server 20 in various configurations or communication service operator's server 101.

### C-2.

In the above-described system, mobile station 10 deletes the stored logs, just after transmitting the logs to communication management server 20.

In some systems, the logs to be deleted are kept for a prescribed period after the transmission. In such systems, the logs are accessible for a prescribed period. During the prescribed period, each employee can check whether s/he has used the mobile station 10 properly, by referring to the logs.

If a corporation thinks that access by each employee to the logs is undesirable, then mobile station 10 may be configured to store authentication information such as a password for accessing the logs stored in mobile station 10. Thus, only a person who knows the correct authentication information, for example the person's supervisor, is able to access the logs. In such a system, communication management server 20 stores for each mobile station authentication information such as a password along with a telephone number of each mobile station 10, and transmits to mobile station 10 the authentication information with a condition file.

Only parts of the logs may be deleted. For example, summary information, such as numbers of accesses to either open sites or Intra sites, or an order of the total data transfer are kept in mobile station 10, while details of logs are deleted just after transmitting the logs to communication management server.

### C-3.

The condition file may include fields other than those described above, according to criteria set by each corporation. For example, prohibited destinations of communications, such as URLs of Web sites and destination email addresses may be stored in logs, in a case that some communications are prohibited.

In the above, a condition file is transmitted from communication management server 20 to mobile station 10 by a 'push' type transmission. The condition file may also be transmitted by a 'pull' type transmission.

### C-4.

An online connection between corporate terminal 30 of a corporation and communication management server 20 of a service provider is not necessary. The connection may be off-line. In the latter case, corporate terminal 30 stores information for example, a condition file and a telephone number, in a storage medium. The corporation sends the storage medium to the service provider. Then, communication management server 20 of the service provider reads a condition file and telephone number from the storage medium, stores them in non-volatile memory unit 23, and transmits the stored telephone number, condition file, and management program to communication service operator's server 101. Communication service operator's server 101 makes a call to each mobile station 10 on the basis of the received telephone number, and transmits to each mobile station 10 the management program and the condition file for each mobile station 10.

### C-5.

In addition to email transmission/reception and Web accesses, communications between mobile station 10 and other external units may be stored in logs or be restricted. Voice communication performed by mobile station 10 may also be stored in logs or be restricted.

### C-6.

In the above-described system, each corporation may wish to manage communications performed by mobile station 10 used by an employee. The present invention is not limited to this type of application. The present invention may be used for managing communications performed by each mobile station 10 on the basis of a differently defined condition file for each mobile station 10. It is to be noted that some condition files may be identical for some mobile stations 10; for example for employees having a similar rank and working in the same division in a corporation. Namely, even a case in which some, but not all, of the total number of mobile stations have a common condition file is also included in the scope of the present invention.

### C-7.

Programs executed on the above-mentioned communication management server 20 may be provided in a stored form on recording media, including magnetic recording tapes, magnetic hard disks, flexible disks, optical storage media, such as Compact Disk-ROMs, and magneto-optical storage media, such as Digital Versatile Disk (DVD)-RAMs.

## Claims

1. A server apparatus (20, 101) comprising:
a condition database arranged to store an MS-ID and a condition file for each of a plurality of mobile stations (10), an MS-ID being uniquely assigned to each mobile station; and
a delivering unit (22) arranged to transmit to each mobile station (10) a condition file stored in the condition database corresponding to the MS-ID of the mobile station,
**characterized in that** the condition file specifying for each mobile station which communication performed by the mobile station is to be stored in a log at the mobile station.

2. The server apparatus (20, 101) according to Claim 1, wherein the condition file includes at least one of an access time condition of the communication to be stored, a destination condition of the communication to be stored, and a keyword condition of the communication to be stored.

3. The server apparatus (20, 101) according to Claim 1, further comprising:
a log database arranged to store for each corporation a corporate ID, one or more sets of MS-IDs and employee IDs, a corporate ID being uniquely assigned to each corporation, an employee ID being assigned to a user authorized by each corporation to use a mobile station (10) having the MS-ID; and
a receiving unit (22) arranged to receive from each mobile station (10) via a mobile communication network (100, 200) an MS-ID of the mobile station and the logs stored in the mobile station,
wherein the logs received from each mobile station by the receiving unit (22) are stored in the log database corresponding to the corporate ID, the corporate ID corresponding to the MS-ID received from each mobile station (10) in the log database, and
wherein the transmitting unit (22) is arranged to transmit logs for each mobile station (10) stored in the log database to the mobile station having an MS-ID corresponding to the logs.

4. The server apparatus (20, 101) according to Claim 1, further comprising:
a storage unit (23) arranged to store authentication information corresponding to an MS ID of each mobile station (10), the server apparatus (20, 101) being arranged to use the authentication data to access logs stored in each mobile station (10),
wherein the delivering unit (22) is arranged to transmit to a mobile station (10) via the mobile communication network (20, 101) authentication information stored in the storage unit (23) corresponding to an MS-ID of the mobile station (10).

## Patentansprüche

1. Server-Gerät (20, 101) mit:
einer Bedingungs-Datenbank, die angeordnet ist, eine MS-ID und eine Bedingungs-Datei für jede aus einer Vielzahl von Mobilstationen (10) zu speichern, wobei eine MS-ID eindeutig zu jeder Mobilstation zugeordnet ist,
**dadurch gekennzeichnet, dass**
die Bedingungs-Datei für jede Mobilstation spezifiziert, welche Kommunikation, die von der Mobilstation durchgeführt wird, in einem Protokoll bei der Mobilstation gespeichert werden soll; und
eine liefernde Einheit (22) angeordnet ist, an jede Mobilstation (10) eine Bedingungs-Datei zu liefern, die in der Bedingungs-Datenbank gespeichert ist, entsprechend der MS-ID der Mobilstation.

2. Server-Gerät (20, 101) nach Anspruch 1, wobei die Bedingungs-Datei zumindest eine Zugriffszeit-Bedingung der zu speichernden Kommunikation und/oder eine Ziel-Bedingung der zu speichernden Kommunikation und/oder eine Passwort-Bedingung der zu speichernden Kommunikation umfasst.

3. Server-Gerät (20, 101) nach Anspruch 1, weiter mit:
einer Protokoll-Datei, die angeordnet ist, für jedes Unternehmen eine Unternehmens-ID, einen oder mehrere Sätze von MS-IDs und Angestellten-IDs zu speichern, wobei eine Unternehmens-ID eindeutig jedem Unternehmen zugeordnet ist, eine Angestellten-ID eindeutig einem Benutzer zugeordnet ist, der von jedem Unternehmen autorisiert ist, eine Mobilstation (10) mit der MS-ID zu verwenden, und
einer empfangenden Einheit (22), die angeordnet ist, von jeder Mobilstation (10) über ein Mobilkommunikationsnetzwerk (100, 200) eine MS-ID der Mobilstation und die in der Mobilstation gespeicherten Protokolle zu empfangen,
wobei die Protokolle, die von jeder Mobilstation durch die empfangende Einheit (22) empfangen werden, in der Protokolldatenbank entsprechend der Unternehmens-ID gespeichert werden, wobei die Unternehmens-ID der MS-ID, die von jeder Mobilstation (10) empfangen wird, in der Protokoll-Datenbank entspricht, und
wobei die sendende Einheit (22) angeordnet ist, Protokolle für jede Mobilstation (10), die in der Protokoll-Datenbank gespeichert ist, an die Mobilstation zu senden, die eine MS-ID aufweist, die den Protokollen entspricht.

4. Server-Gerät (20, 101) nach Anspruch 1, weiter mit:
einer Speichereinheit (23), die angeordnet ist, Authentifizierungsinformation entsprechend einer MS-ID jeder Mobilstation zu speichern, wobei das Server-Gerät (20, 101) angepasst ist, die Authentifizierungsdaten zu verwenden, um auf Protokolle zuzugreifen, die in jeder Mobilstation (10) gespeichert sind,
wobei die liefernde Einheit (22) angepasst ist, Authentifizierungsinformation an eine Mobilstation (10) über das Mobilkommunikationsnetzwerk (20, 101) zu liefern, die in der Speichereinheit (23) gespeichert ist, entsprechend einer MS-ID der Mobilstation (10).

## Revendications

1. Appareil serveur (20, 101) comprenant :
une base de données de conditions, prévue pour stocker un identificateur de station mobile (MS-ID) et un fichier de conditions pour chacune d'une pluralité de stations mobiles (10), un MS-ID étant attribué de manière unique à chaque station mobile ; et
une unité de fourniture (22) prévue pour transmettre, à chaque station mobile (10), un fichier de conditions conservé dans la base de données de conditions, et correspondant au MS-ID de la station mobile,
**caractérisé en ce que** le fichier de conditions spécifie pour chaque station mobile quelle communication effectuée par la station mobile doit être stockée dans un registre-journal au niveau de la station mobile.

2. Appareil serveur (20, 101) selon la revendication 1, dans lequel le fichier de conditions inclut au moins l'une d'une condition de temps d'accès de la communication devant être stockée, d'une condition de destination de la communication devant être stockée et d'une condition de mot clé de la communication devant être stockée.

3. Appareil serveur (20, 101) selon la revendication 1, comprenant en outre :
une base de données de registres-journaux, prévue pour stocker, pour chaque entreprise, un ID d'entreprise, un ou plusieurs ensembles de MS-ID et de ID d'employé, un ID d'entreprise étant attribué de manière unique à chaque entreprise, un ID d'employé étant attribué à un utilisateur autorisé par chaque entreprise à utiliser une station mobile (10) ayant le MS-ID ; et
une unité réceptrice (22) prévue pour recevoir de chaque station mobile (10) par l'intermédiaire d'un réseau de communications mobiles (100, 200), un MS-ID de la station mobile et les registres-journaux stockés dans la station mobile,
dans lequel les registres-journaux, reçus de chaque station mobile par l'unité de réception (22), sont stockés dans la base de données de registres-journaux correspondant au ID d'entreprise, l'ID d'entreprise correspondant au MS-ID reçu de chaque station mobile (10) dans la base de données de registres-journaux, et
dans lequel l'unité de transmission (22) est prévue pour transmettre des registres-journaux pour chaque station mobile (10), stockés dans la base de données de registres-journaux, à la station mobile ayant un MS-ID correspondant aux registres-journaux.

4. Appareil serveur (20, 101) selon la revendication 1, comprenant en outre :
une unité de stockage (23) prévue pour stocker des informations d'authentification correspondant à un MS-ID de chaque station mobile (10), le serveur (20, 101) étant prévu pour utiliser les données d'authentification pour accéder à des registres-journaux stockés dans chaque station mobile (10),
dans lequel l'unité de fourniture (22) est prévue pour transmettre à une station mobile (10), par l'intermédiaire du réseau de communications mobiles (20, 101), des informations d'authentification stockées dans l'unité de stockage (23) et correspondant à un MS-ID de la station mobile (10).
